(19) Europäisches Patentamt
European Patent Office
Office européen des brevets

(11) Publication number: **0 344 935 A2**

(12) **EUROPEAN PATENT APPLICATION**

(21) Application number: **89304786.0**

(51) Int. Cl.[4]: **C08G 65/00**

(22) Date of filing: **11.05.89**

(30) Priority: **19.05.88 US 195912**

(43) Date of publication of application:
**06.12.89 Bulletin 89/49**

(84) Designated Contracting States:
**AT BE CH DE ES FR GB GR IT LI LU NL SE**

(71) Applicant: **E.I. DU PONT DE NEMOURS AND COMPANY (a Delaware corporation)**
**1007 Market Street**
**Wilmington Delaware 19898(US)**

(72) Inventor: **Nappa, Mario Joseph**
**3 Oakridge Court**
**Newark Delaware 19711(US)**
Inventor: **Sievert, Allen Capron**
**215 Rhett Lane**
**Elkton Maryland 21921(US)**

(74) Representative: **Woodcraft, David Charles et al**
**High Holborn House 52/54 High Holborn**
**London WC1V 6SE(GB)**

(54) **Photo-assisted solution phase direct fluorination process improvement.**

(57) Photo-assisted solution phase direct fluorination process improvement in which the solution phase is irradiated with an ultraviolet source while the concentration of fluorine in the reaction is increased from 20% to 50% by volume and thereafter the irradiation is maintained until the reaction is complete.

F I G. 1

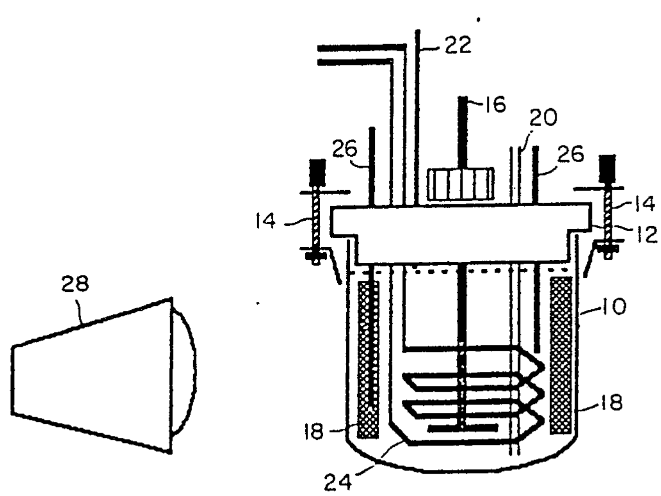




Xerox Copy Centre

# PHOTO-ASSISTED SOLUTION PHASE DIRECT FLUORINATION PROCESS IMPROVEMENT

## BACKGROUND OF THE INVENTION

The present invention relates to an improved process for preparing perfluorinated compounds, such as perfluoropolyethers, which involves photo-assisted solution phase direct fluorination, and, more particularly, to an improved process for perfluorinating partially fluorinated polyfluoroethers.

U.S. Patent 3,962,348 and its British counterpart, GB 1,450,467, describe a process for preparing aliphatic and cyclic perfluoro-alkyl ethers in high yields in which tetrafluoroethylene or hexafluoro-propene adducts of aliphatic or cyclic alcohols are subjected to electrofluorination. Among the compounds described are perfluoroalkyl ethers of the general formula $C_3F_7OCF_2$-$(CFOC_3F_7)_mCF_2OC_3F_7$, where m = 1 to 4.

European Patent Application EP 0 190 393 describes a liquid phase fluorination process in which F-hexane (FC-72) and 1,1,2-trichloro-1,2,2-trifluoroethane (CFC-113) are used in combination as the reaction medium or solvent for the substrate in liquid-phase photofluorination. This combination broadens the substrate spectrum applicable to this method from partially fluorinated substrates to unfluorinated substrates. The fluorine is maintained in stoichiometric excess at all times, and the compound to be fluorinated is metered into the reactor slowly with vigorous stirring to maintain a low concentration relative to fluorine, and to ensure that efficient heat dispersal occurs.

J. M. Tedder, "Chemistry and Industry", April 30, 1955, pp. 508, 509, describes the accelerating effect of UV light in the direct fluorination of aliphatic compounds.

U.S. Patent 4,004,996 describes a process for fluorinating organic compounds in which the compound to be fluorinated is suspended in liquid hydrogen fluoride or in a mixture of liquid hydrogen fluoride and boron trifluoride or antimony pentafluoride and fluorine is bubbled through the solution for a time sufficient to produce the desired extent of fluorination. Optionally, the process can be conducted under irradiation with light.

U.S. Patent 4,593,050 describes ultraviolet light assisted fluorination of polymer surfaces without having substantial degradation of the polymer surface. The ultraviolet radiation, which has a wavelength generally of less than 400 nm, can be obtained from any convenient source, such as a UV lamp or plasma electrical discharge.

The preparation of perfluoropolyethers by fluorination of partially fluorinated polyethers in an aprotic solvent with dilute fluorine is described in European Patent Application No. 0 148 482. In this process, UV light may be used to accelerate the fluorination.

European Patent Application No. 0 193 028 describes a process for the neutralization of perfluoropolyethers by reacting them with gaseous fluorine in the presence of radiation having a wavelength from 200 to 500 nm. Radiation allows lower temperatures and higher reaction rates.

## SUMMARY OF THE INVENTION

The present invention is an improvement in a process for preparing perfluoropolyethers of the general formulas:

I $R(CF_2OC_xF_{2x+1})_a(OC_xF_{2x+1})_b$

where x = 2,3
a, b = an integer from 0 - 4 with (a+b) ≥ 1; and
R = $C_nF_{2n+2}$ - (a+b);

II $C_xF_{2x+1}O[(CF_2)_cCF_2CFR^1O]_dC_x F_{2x+1}$

where $R^1$ = F and c = 0 - 4 or $R^1$ = $CF_3$ and c = 0;
d = 2, 3; and
x = 2, 3;

III cyclo-$C_6F_e(R^2)_f(OC_xF_{2x+1})_g$

where e = 0 - 5;
f = 0 - 2;
g = 1 - 6,
with e + f + g = 6;
x = 2, 3; and
$R^2$ = a linear or branched $C_1$-$C_{10}$ perfluoroalkyl group;

IV Perfluorinated cyclic ethers, such as, for example:

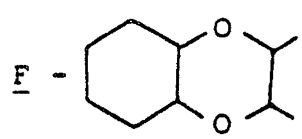

The process of this invention involves perfluorination of partially fluorinated intermediates. In the case of the compounds I - IV the intermediates can be obtained by a process which comprises reacting an alcohol or polyalcohol with a fluorinated olefin in the presence of a base in a polar aprotic solvent, such as N,N-dimethylformamide as described in more detail in U. S. Patent 2,409,274, the teachings of which are incorporated herein by reference as well as in England et al., J. Am. Chem. Soc. 1960, Vol. 82, pp. 5116-5122; U. S.

Patent 3,962,348; and in U. S. Patent 4,024,192.

The process of this invention is also applicable to partially fluorinated polyfluoroethers, such as:

$\underline{V}$ $A(CH_2CF_2CF_2O)_hCH_2CF_2C(O)F$

where $\overline{h}$ = 1 - 200;

A = halide, or $R^3O$ where $R^3$ = a perfluoroalkyl group or perfluorooxyalkylene and $R^3O$ is derived from the reaction of a perfluoro acid fluoride with an alkali metal fluoride; and

$\underline{VI}$ $R^4R^5COF$

where $\overline{R^4}$ =

$BO(CF_2CF_2O)_i(CF_2O)_j(CFCF_3O)_k(CF_2CFCF_3O)_l$-$(CFCF_3CF_2O)_m$

where B = $CF_3$, $C_2F_5$, $C_3F_7$, or $CF(CF_3)_2$;

i, j, k, l, and m ≥ 0 with (i + j + k + l + m) > 0; and

$R^5$ = $CF_2$, $CF_2O$, $CF_2CF_2$, $CFCF_3$, $CF_2CFCF_3$, or $CFCF_3CF_2$

to give products of the type:

$\underline{VII}$ $A(CF_2CF_2CF_2O)_hCF_2CF_3$

and

$\overline{VIII}$ $R^4R^5F$

as described in more detail in, respectively, EP 148 483 and EP 193 028.

The process improvement of this invention applies to a fluorination process for preparing perfluoropolyethers which comprises:

(1) dissolving an intermediate to be fluorinated in an inert solvent;

(2) cooling or heating the solution with rapid stirring to an appropriate temperature;

(3) purging the solution with an inert gas to expel dissolved oxygen;

(4) passing an oxygen-free inert gas stream containing an initial fluorine concentration of from 1 to 10% by volume through the solution, and then increasing the fluorine concentration in the gas stream according to a predetermined timed sequence; and

(5) isolating the perfluoropolyether by distillation;

the improvement comprising:

irradiating the solution with an ultraviolet source while the concentration of fluorine in the gas stream is increased from 20% by volume to 50% by volume and maintaining the irradiation and flow of fluorine-containing gas until the reaction is complete.

The process improvement of this invention is easily adaptable to scale-up and very economical for preparing a wide range of perfluorinated compounds. It is especially applicable to perfluorinating a wide range of intermediates which are partially fluorinated products of known fluorination reactions.

The perfluoropolyethers which can be prepared according the the process improvement of this invention find applications in vapor phase soldering, as heat transfer media, in artificial blood, and in oxygen perfusion media.

## BRIEF DESCRIPTION OF THE DRAWING

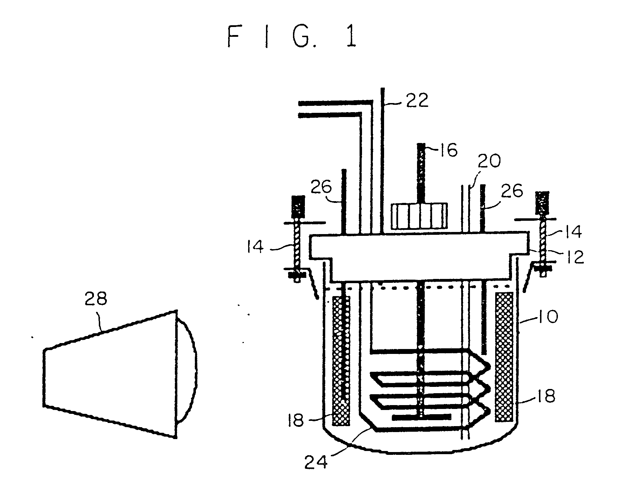

Fig. 1 is a cross sectional diagram of a photo-fluorination reactor which is useful in practicing the improved process of this invention.

## DETAILED DESCRIPTION OF THE INVENTION

According to the process improvement of this invention, ultraviolet radiation during the later stages of the fluorination reaction unexpectedly improves yield by promoting the substitution of residual hydrogen atoms with fluorine atoms. Particularly important, however, is the discovery that the ultraviolet radiation must be commenced at the proper stage of the reaction, i.e., not before the concentration of fluorine in the feed gas stream reaches 20% by volume, and then maintained until the reaction is complete. Irradiation of the reaction before the concentration of fluorine reaches 20% by volume can result in a lower yield of the desired product.

The process improvement of this invention is particularly applicable to the preparation of perfluorinated compounds of formulas $\underline{I}$, $\underline{II}$, $\underline{III}$, $\underline{IV}$, $\underline{VII}$, and $\underline{VIII}$, as defined above by reacting a partially fluorinated intermediate with elemental fluorine. In the case of perfluoroethers and perfluoropolyethers, the partially fluorinated intermediates can be obtained by reacting an alcohol, such as ethanol, or a polyol, such as ethylene glycol or pentaerythritol, with a highly fluorinated olefin, such as tetrafluoroethylene (TFE) or hexafluoropropylene (HFP), in the presence of a base, such as potassium hydroxide or triethylamine, in a polar aprotic solvent, such as N,N-dimethylformamide.

In carrying out the process improvement of this invention, the desired intermediate or substrate, preferably a partially fluorinated intermediate, is first dissolved in an inert solvent. Solvents suitable for the process of this invention include those that are relatively unreactive toward fluorine, i.e., solvents which do not have replaceable hydrogen; labile halide, such as bromine or iodine; unsaturated bonds, such as olefinic or aromatic groups; easily oxidized atoms, such as P, As, S, Se, metallic elements, or the cogeners of any of the aforementioned elements. Preferred solvents include perfluorinated alkanes, such as the isomeric mixture or perfluorohexanes which are available as "Fluorinert 72." Other suitable solvents include perfluorocarbons containing oxygen or nitrogen ("Fluorinert" 70) and perfluoropolyethers, such as "Krytox" 143 AZ or the products of this invention as illustrated in the Examples. Most preferred are chlorofluorocarbons selected from 1,1,2-trichloro-1,2,2-trifluoroethane (CFC-113), chlorotrifluoromethane (CFC-11), 1,2-dichloro-1,1,2,2-tetrafluoroethane (CFC-114) and the like because of their low reactivity toward fluorine, high volatility to simplify product separation, and their ability to dissolve a wide range of solutes.

Additionally, the solvent should be free of dissolved oxygen gas. This can be accomplished by purging the solution with an inert gas, such as nitrogen, prior to beginning the fluorination. It is also desirable that the substrate to be fluorinated be soluble in the solvent at the temperature of the fluorination. Fluorination of a suspension of solids versus a solution can result in a low rate of hydrogen substitution. Fluorination of a non-miscible liquid, particularly one containing a high percentage of fluorine-replaceable hydrogens, can result in a non-selective fluorination reaction.

The choice of solvent for the process of this invention is dictated by the temperature of the process and the vapor pressure of the solvent at that temperature. In general, the solvent may be used at any temperature between the freezing point and the temperature at which the solvent develops a vapor pressure of 100 mm Hg. In the case of CFC-113, for example, the useful working temperature range is from -30° C to 0° C, preferably from -25° C to -10° C. The concentration of the substrate dissolved in the solvent is preferably in the range of 0.1-50% by weight of the solution, and most preferably in the range of 1-10% by weight.

The temperature at which the process is to be run is dictated by the number of hydrogens to be replaced by fluorine in the substrate of interest as well as the vapor pressure of the substrate. In general, the more hydrogens there are to be replaced in a molecule, the lower the reaction temperature will need to be to maintain a controlled reaction in the early stages of fluorine addition. If a substrate has only a few hydrogens in the molecule, for example, compounds having <0.5% by weight hydrogen in the molecule, it is possible and often desirable to begin the fluorination at higher temperature and to select a solvent having an appropriate vapor pressure at that temperature. It is also desirable to run the reaction at a temperature where the substrate to be fluorinated has low vapor pressure, preferably less than 10 mm Hg, so as to minimize the possibility of a vapor phase explosion due to build-up of substrate vapor above the solution in the reactor. For partially fluorinated compounds with sufficiently high molecular weight, being liquid at the reaction temperature, having low vapor pressure, and only a low percentage of hydrogens to be replaced in the molecule (<0.5% by weight), it is possible to operate the process of this invention without any solvent at all.

The solution is charged to a low temperature reactor, i.e., photofluorinator, of the type shown diagramatically in cross section in Fig. 1. The reactor comprises a vessel or bottle, 10, made from fluorinated ethylene/propylene copolymer (FEP) having a stainless steel head 12 held in place as shown with compression clamps 14. Typically, the reactor is equipped with a stirring rod 16 of non-corrosive material, such as "Monel", and at least two "Teflon" baffles 18 which aid in allowing the contents of the reactor to be vigorously agitated. It is critical that the contents of the reactor be vigorously agitated during the entire process. Thus, the "Monel" stirring rod is connected to a motor capable of developing a shaft speed of about 1000 rpm. A gas inlet tube 20 is provided for introducing fluorine into the reactor, and a gas outlet tube 22 just penetrating the head serves to vent the exit gas. Copper cooling coils 24 are also provided to cool the contents of the reactor during the reaction. A suitable cooling fluid is CFC-11. Temperature is usually monitored by at least two thermocouples 26, which are protected by "Monel" sheaths.

In practicing this invention, a source of ultraviolet radiation 28, such as, for example, a Sylvania #RSM 275W sun lamp, is located about six inches from the reactor vessel as shown so that the contents of the vessel will be thoroughly irradiated at the appropriate time during the reaction. Other sources of ultraviolet light, such as mercury arc lamps, may be used in the process of the invention so long as at least 5% of the output of the light source is in the region from about 200 nm to about 400 nm. A normal incandescent light bulb does not have sufficient power in this region to promote the reaction of fluorine with the substrate. This is shown in Example 8.

Prior to initiating the fluorination, the temperature of the solution of the substrate is adjusted to between the freezing point of the solvent and that temperature which corresponds to a solvent vapor pressure of no more than 100 mm Hg. For fluorination of a partially fluorinated compound containing 1-3% by weight hydrogen in a CFC-113 solvent solution, the solution is typically cooled to a temperature between -10° C and -25° C. The agitation is begun, and the solution is purged with nitrogen to displace dissolved oxygen in the solvent or solute.

The fluorine gas is diluted with an inert gas, such as helium, neon, argon, or nitrogen to an

initial concentration of from 1% to about 10% by volume, and preferably not exceeding 5% by volume, prior to introducing the gas into the reactor. For reasons of economy the preferred inert gas diluent is nitrogen. The fluorine is introduced into the reactor at an initial concentration which can range from 1% to about 10% by volume. If the reaction conditions are made too vigorous in the initial stages of the reaction by using an excessively high concentration of fluorine, the intermediate polyether starting material may be subject to degradative attack, producing many undesirable by-products and consequently poor yields of the perfluoropolyether. It is known that a high concentration of fluorine in the early stages of a fluorination reaction can lead to fragmentation of chemical bonds. These undesired side reactions can be minimized by initiating the fluorination under mild conditions. For these reasons it is preferred that the initial concentration of fluorine not exceed 5% by volume. It has also been discovered in connection with this invention that the use of a partially fluorinated substrate as a starting material improves selectivity in the reaction. This can be seen by comparing Examples 5 and 6.

The initial concentration of fluorine in the feed gas is gradually increased according to a predetermined timed sequence to 50% by volume (or to any other desired maximum realistic concentration) over the course of one of five hours. The timing of the reaction sequence is determined by the amount of hydrogen present in the substrate. If the substrate has greater than about 3% hydrogen by weight, then the increase in the concentration of fluorine in the feed gas must occur over the course of about three hours. If the substrate contains 0.5% hydrogen by weight or less, then the concentration of fluorine can be increased more rapidly. More particularly, the predetermined timed sequence comprises (a) maintaining the initial fluorine concentration in the inert gas stream until from 1 to and including 5% of the theoretical amount of fluorine has been introduced into the reaction solution, (b) increasing the fluorine concentration to a value up to and including 28% by volume and maintaining that concentration until up to and including 12% of the theoretical amount of fluorine has been introduced into the reaction solution, (c) increasing the fluorine concentration to a value up to and including 35% by volume and maintaining that concentration until up to and including 20% of the theoretical amount of fluorine has been introduced into the reaction solution, (d) increasing the fluorine concentration to a value up to and including 42% by volume and maintaining that concentration until up to and including 35% of the theoretical amount of fluorine has been introduced into the reaction solution, and (e) increasing the fluorine concentration to a desired realistic maximum value and maintaining that concentration until up to from 100% to and including 200% of the theoretical amount of fluorine has been added to the reaction solution. It will be regognized that the concentration of fluorine in the feed gas can be increased by up to 41% by volume or higher in any single step of the sequence and that the sequence may consist of fewer steps as desired. However, a preferred maximum increase for each step is 20% by volume which permits a relatively gradual increase in the concentration of fluorine throughout the reaction and tends to avoid complications which can be introduced by un uncontrolled fluorination. As the concentration of fluorine in the reaction is increased, it is often desirable to reduce the flow rate of fluorine-containing feed gas into the reactor for economy and to reduce the waste load on the fluorine scrubbing system. After the concentration of fluorine in the feed gas reaches preferably about 50% by volume, the fluorine concentration is maintained constant thereafter for an additional two to five hours or until the reaction is complete. In practice, the fluorine concentration in the feed gas may be raised to 75% by volume or higher, but no improvement in yield is expected, and safety considerations may suggest that fluorine concentrations higher than 50% by volume should be avoided. The feed gas is passed continuously through the reactor during the reaction, and gas leaving the reactor is passed through sodium fluoride and alumina or carbon scrubbers to remove HF and fluorine, respectively, in the effluent gas.

The course of the reaction can be monitored using gas chromatography to follow the disappearance of the intermediates and appearance of the product. The reaction is judged to be complete when there are no fluorine-replaceable hydrogens remaining in the reaction mixture as judged by proton NMR spectroscopy.

In the later stages of the reaction, it becomes progressively more difficult to replace all of the hydrogen substituents of the intermediate with fluorine atoms. By irradiating the reaction solution with ultraviolet radiation according to the improvement of this invention, it is possible to achieve a significantly higher degree of fluorine substitution. It is important that the irradiation be initiated at an appropriate time in the fluorination sequence otherwise the intermediate may be subjected to degradative attack due to the high reactivity of the fluorine atoms generated by the influence of the ultraviolet light. The improvement of this invention achieves an appropriate balance between the concentration of fluorine in the feed gas and the degree of completion of the reaction and comprises irradiating the reaction solution with an ultraviolet source while increasing the concentration of fluorine in the feed gas from about 20% by volume of 75% by volume, preferable 20% to 50% by volume, and maintaining the irradiation until the reaction is complete. In a preferred embodiment of this invention, the irradiation is not commenced until the concentration of fluorine in the feed gas has been increased to 28% by volume.

Ultraviolet radiation is beneficial in the later stages of the fluorination process because it promotes the substitution of residual hydrogen atoms with fluorine atoms, but, more particularly and critical to the reaction is the discovery that the reactants must be exposed to the ultraviolet radiation at the proper stage of the reaction, not before the concentration of fluorine in the feed gas reaches at least 20% by volume. As will be apparent from the following comparative examples, the yield of perfluoropolyether is adversely affected by exposing the reactants to ultraviolet radiation too early in the process. Suprisingly, when irradiation is commenced at a 10 to 15% by volume fluorine concentration, the yield of perfluoropolyether reaches only 20-30%. In contrast, when irradiation is commenced after the concentration of fluorine in the feed gas has reached 20-50% by volume, much higher yields are achieved. Alternatively, it has also been discovered that commencing irradiation after the concentration of fluorine in the feed gas has reached or exceeded 50% by volume results in less efficient use of the fluorine, i.e., a higher percentage of fluorine introduced into the reaction may pass through the reactor without reacting due to the slow rate of thermal hydrogen replacement during the later stages of a fluorination reaction. This can be seen more clearly by referring to Examples 3 and 4.

It will be appreciated by those skilled in the art that each substrate will present slightly different characteristics which must first be evaluated by running several small scale reactions to define the optimum concentration, temperature, timing of fluorine concentration increases, and total reaction time for that substrate. The invention is further illustrated by the following examples.

## EXAMPLE 1

### Preparation of Pentaerythritol Tetrakis(1,1,2,2-tetrafluoroethyl ether)

A 400 ml "Hastelloy" C bomb was charged with pentaerythritol (17.02 g, 0.125 mole), potassium hydroxide (1.75 g, 0.0312 mole), and N,N-dimethylformamide (125 mL). A total of 51.5 g. (0.515 mole) of TFE was added over a temperature range of 0° to 50° C. The product was separated from the crude reaction product by extraction into an ether phase. The ethereal solution was dried over sodium sulfate and vacuum distilled. The product (52.31 g, 78% yield) was collected at 125C (10 mm Hg) and was judged to be 98% pure by gas chromatography.

### Fluorination of Pentaerythritol Tetrakis(1,1,2,2-tetrafluoroethyl ether)

Pentaerythritol tetrakis(1,1,2,2-tetrafluoroethyl ether) prepared as above (5.0 g, 9.32 mole) was added to CFC-113 (370 mL) in an FEP reactor. The solution was cooled to -15° C and purged with nitrogen at 100 sccm for 0.5 hour. Fluorine diluted with nitrogen was added according to the following predetermined timed sequence: 5 sccm (4.8%) - 30 min., 11.8% -30 min., 28.6% - 20 min., 40% - 20 min., 50% - 130 min. At the end of the reaction the ratio of $F_2$ added to each H in the substrate was 1.5. When the $F_2$ concentration reached 50%, a UV flood lamp positioned outside the reactor body and directed at the reaction was turned on for the remainder of the experiment. In three experiments a total of 11.0 g of pentaerythritol tetrakis-(1,1,2,2-tetrafluoroethyl ether) was fluorinated. The collective product, F-pentaerythritol tetraethyl ether, was isolated in 71% yield (11.0 g, bp 196C); it was analyzed by GCMS and 19F NMR.

## EXAMPLE 2

### Fluorination of Pentaerythritol Tetrakis(1,1,2,2-tetrafluoroethyl ether)

Pentaerythritol tetrakis (1,1,2,2-tetrafluoroethyl ether) as prepared in Example 1 (5.0 g, 9.32 mole) was added to CFC-113 (370 mL) in an FEP reactor. The solution was cooled to -25° C and purged with nitrogen at 100 sccm for 0.5 hour. Fluorine diluted with nitrogen was added according to the following schedule: 5 sccm (4.8%) - 30 min., 10 sccm (11.8%) - 30 min., 20 sccm (28.6%) - 20 min., 20 sccm (40S) - 20 min., 20 sccm (50%) - 130 min. At the end of the reaction the ratio of $F_2$ added to each H in the substrate was 1.57. When the $F_2$ concentration reached 28.6%, a UV flood lamp positioned outside the reactor body and directed at the reaction was turned on for the remainder of the experiment. In two experiments a total of 10.0 g of pentaerythritol tetrakis(1,1,2,2-tetrafluoroethyl ether) was fluorinated. The collective product (9.26 g, .0123 mole), F-pentaerythritol tetraethyl ether, was

isolated in 66% yield.

EXAMPLE 3

Reaction of Hexafluoropropylene with Pentaerythritol

Pentaerythritol (10.0 g, 0.0734 mole), potassium hydroxide (1.60 g, 0.0285 mole) and THF (30 mL) were placed in a 400 mL bomb having a stainless steel liner. The bomb was cooled to -78° C, and HFP (66 g, 0.440 mole) was condensed into the bomb. The bomb was placed in a barricade and heated to ca. 50° C. The pressure in the bomb rose to 160 psig but gradually dropped to about 140 psig after 4 hrs. at 50° C.

The reaction product consisted of a yellow supernatant over a white solid. The mixture was poured into water and the organic components were extracted with diethyl ether. The ether layer was dried over sodium sulfate. The ethe was then evaporated in vacuum and residual liquid vacuum distilled (10 mm Hg). Three fractions were collected with boiling points up to 122° C (total of 9.41 g; pot residue weighed 0.97 g). Each of the three fractions consisted of a mixture of at least ten products.

Fluorination of Product from the Reaction of Pentaerythritol with Hexafluoropropylene

The product from the reaction of pentaerythritol and HFP as described above (15.0 g, .0204 mole) was added to CFC-113 (370 mL) in an FEP reactor. The solution was cooled to -15° C and purged with nitrogen at 100 sccm for 0.5 hour. Fluorine diluted with nitrogen was added according to the following schedule: 4.8% (5 sccm/10 sccm) - 20 min., 11.8% (10 sccm/75 sccm) - 20 min., 28.6% (20 sccm/50 sccm) - 20 min., 40% (20 sccm/30 sccm) - 51 min. At the end of the reaction the ratio of $F_2$ added to each H in the substrate was 1.75. When the $F_2$ concentration reached 28.6%, a UV flood lamp positioned outside the reactor body and directed at the reaction was turned on for the remainder of the experiment. A total of 49.3 g of material was fluorinated in five batches and the collective product, F-pentaerythritol tetrapropyl ether, was isolated in 46% yield (29.2 g, bp 219C).

COMPARATIVE EXAMPLE 4

Fluorination of Product from the Reaction of Pentaerythritol with Hexafluoropropylene

The product from the reaction of pentaerythritol and HFP as described in Example 3 (5.0 g, .0068 mole) was added to CFC-113 (370 mL) in an FEP reactor. The solution was cooled to -15° C and purged with nitrogen at 100 sccm for 0.5 hour. Fluorine diluted with nitrogen was added according to the following schedule: 4.8% (5 sccm/100 sccm) - 20 min., 11.8% (10 sccm/75 sccm) - 20 min., 28.6% (20 sccm/50 sccm) 20 min., 40% (20 sccm/30 sccm) - 20 min., 50% (20 sccm/20 sccm) - 153 min. At the end of the reaction the ratio of $F_2$ added to each H in the substrate was 2.1. When the $F_2$ concentration reached 11.8%, a UV flood lamp positioned outside the reactor body and directed at the reaction was turned on for the remainder of the experiment. The product, F-pentaerythritol tetrapropyl ether, was isolated in 26% yield (1.7 g, bp 219C).

EXAMPLE 5

Fluorination of Ethylene Glycol Bis(1,1,2,2-tetrafluoroethyl)

Ethylene glycol bis(1,1,2,2-tetrafluoroethyl ether) (1.0 g, .0038 mole), prepared from ethylene glycol and TFE by a procedure similar to that described in Example 1, was added to CFC-113 (370 mL) in an FEP reactor. The solution was cooled to -15° C and purged with nitrogen at 100 sccm for 0.5 hour. Fluorine diluted with nitrogen was added according to the folloiwng schedule: 4.8% (5 sccm/100 sccm) - 20 min., 16.7% (10 sccm/50 sccm) - 20 min., 33.3% (10 sccm/20 sccm) - 20 min., and 50% (10 sccm/10 sccm) - 63 min. At the end of the reaction the ratio of $F_2$ added to each H in the substrate was 2.0. When the $F_2$ concentration reached 33.3%, a UV flood lamp positioned outside the reactor body and directed at the reaction was turned on for the remainder of the experiment. The product, F-ethylene glycol diethylether, was obtained in 85% yield by GC analysis.

COMPARATIVE EXAMPLE 6

Fluorination Ethylene Glycol Diethyl Ether

A commercial sample of ethylene glycol diethyl

ether (.45 g. .0038 mole) was added to CFC-113 (370 mL) in an FEP reactor. The solution was cooled to -15° C and purged with nitrogen at 100 sccm for 0.5 hour. Fluorine diluted with nitrogen was added according to the following schedule: 4.8% (5 sccm/100 sccm) - 20 min., 16.7% (10 sccm/50 sccm) - 20 min., 33.3% (10 sccm/20 sccm) - 20 min., and 50% (10 sccm/10 sccm) 209 min. At the end of the reaction the ratio of $F_2$ added to each H in the substrate was 2.0. When the $F_2$ concentration reached 33.3%, a UV flood lamp positioned outside the reactor body and directed at the reaction was turned on for the remainder of the experiment. The product, F-ethylene glycol diethylether was obtained in 43% yield by GC analysis.

## EXAMPLE 7

### Fluorination of 2-Ethyl-2-hydroxymethyl-1,3-propanediol Tri(1,1,2,2-tetrafluoroethyl ether)

A sample of 2-ethyl-2-hydroxymethyl-1,3-propanediol tri(1,1,2,2-tetrafluoroethyl ether) (5.0 g, .01152 mole), prepared from 2-ethyl-2-hydroxymethyl-1,3-propanediol and tetrafluoroethylene by a method similar to that described in Example 1, was added to CFC-113 (370 mL) in an FEP reactor. The solution was cooled to -15° C and purged with nitrogen at 100 sccm for 0.5 hour. Fluorine diluted with nitrogen was added according to the following schedule: 5 sccm (4.8%) -20 min., 10 sccm (11.8%) - 20 min., 20 sccm (28.6%) -20 min., 20 sccm (40%) - 20 min., 20 sccm (50%) - 279 min. At the end of the reaction the ratio of $F_2$ added to each H in the substrate was 1.71. When the $F_2$ concentration reached 28.6%, a UV flood lamp positioned outside the reactor body and directed at the reaction was turned on for the remainder of the experiment. In two experiments a total of 10.0 g of 2-ethyl-2-hydroxymethyl-1,3-propanediol tri(1,1,2,2-tetrafluoroethyl ether) was fluorinated. The collective perfluorinated product (10.8 g, .0157 mole) was isolated in 66% yield.

## COMPARATIVE EXAMPLE 8

### Fluorination of Pentaerythritol Tetrakis(1,1,2,2-tetrafluoroethyl ether)

Pentaerythritol tetrakis(1,1,2,2-tetrafluoroethyl ether) (1.0 g, .0186 mole), prepared as in Example 1, was added to CFC-113 (370 mL) in an FEP reactor. The solution was cooled to -15° C and purged with nitrogen at 100 sccm for 0.5 hour. Fluorine diluted with nitrogen was added according to the following schedule: 5 sccm (4.8%) - 20 min., 10 sccm (16.7%) - 20 min., 10 sccm (33.3%) - 10 min., 20 sccm (40%) - 20 min., and 10 sccm (50%) - 54 min. At the end of the reaction the ratio of $F_2$ added to each H in the substrate was 1.70. When the $F_2$ concentration reached 33.3%, a 150 watt incandescent lamp positioned outside the reactor body and directed at the reaction was turned on for the remainder of the experiment. The reaction solution was sampled, and no product was detected by GC analysis.

## Claims

1. In a process for preparing perfluoropolyethers which comprises:
(a) reacting a polyalcohol with a fluorinated olefin in the presence of a base in a polar aprotic solvent to form a partially fluorinated intermediate;
(b) dissolving the intermediate in an inert solvent;
(c) adjusting the temperature of the solution to between the freezing point of the solvent and that temperature which corresponds to a solvent vapor pressure of 100 mm Hg;
(d) passing an inert gas stream containing an initial fluorine concentration of from 1 to 10% by volume through the solution, and gradually increasing the concentration of fluorine according to a predetermined timed sequence until the concentration of fluorine reaches the desired maximumconcentration; and
(e) isolating the perfluoropolyether;
the improvement comprising:
irradiating the solution with an ultraviolet source while the concentration of fluorine in the inert gas stream is increased from 20% by volume to 75% by volume and maintaining the irradiation until the reaction is complete.

2. In a process for preparing perfluoropolyethers which comprises:
(a) dissolving an intermediate to be fluorinated in an inert solvent;
(b) cooling or heating the solution with rapid stirring to an appropriate temperature;
(c) purging the solution with an inert gas to expel dissolved oxygen;
(d) passing an oxygen-free inert gas stream containing an initial fluorine concentration of from 1 to 10% by volume through the solution, and then increasing the concentration of fluorine in the gas stream according to the predetermined timed sequence; and

(e) isolating the perfluoropolyether, the improvement comprising:
irradiating the solution with an ultraviolet source while the concentration of fluorine in the gas stream is increased from 20% by volume to 75% by volume and maintaining the irradiation and flow of fluorine-containing gas until the reaction is complete.

3. The process of Claim 2 wherein the intermediate is a partially fluorinated intermediate and the predetermined timed sequence comprises:

(a) maintaining the initial fluorine concentration in the inert gas stream until from 1 to 5% of the theoretical amount of fluorine has been introduced into the solution;

(b) increasing the fluorine concentration in the inert gas stream to a value up to 28% by volume and maintaining that concentration until from 5 to 12% of the theoretical amount of fluorine has been introduced into the solution;

(c) increasing the fluorine concentration in the inert gas stream to a value up to 35% by volume and maintaining that concentration until from 12 to 20% of the theoretical amount of fluorine has been introduced into the solution;

(d) increasing the fluorine concentration in the inert gas stream to a value up to 42% by volume and maintaining that concentration until from 20 to 35% of the theoretical amount of fluorine has been introduced into the solution; and

(e) increasing the fluorine concentration in the inert gas stream until the desired maximum fluorine concentration in the inert gas stream has been reached and maintaining that concentration until from 100 to 200% of the theoretical amount of fluorine has been introduced into the solution.

4. The process of Claim 3 wherein the initial fluorine concentration in the inert gas stream is increased according to a predetermined timed sequence of steps in which the difference in fluorine concentration between any of the steps does not exceed 41% by volume.

5. The process of Claim 1, Claim 2, Claim 3, or Claim 4 wherein the ultraviolet source has an output in which at least 5% is in the region from about 200 nm to about 400 nm.

6. The process of Claim 1, Claim 2, Claim 3, or Claim 4 wherein the irradiation is not commenced until the concentration of fluorine in the feed gas has been increased to 28% by volume.

7. The process of Claim 1, Claim 2, Claim 3, or Claim 4 wherein the fully fluorinated perfluoropolyether is isolated by distillation.

8. The process of Claim 1, Claim 2, Claim 3, or Claim 4 in which the solvent is a chlorofluorocarbon selected from 1,1,2,2-trichloro-1,2,2-trifluoroethane, chlorotrifluoromethane, and 1,2-dichloro-1,1,2,2-tetrafluoroethane.

9. The process of Claim 1 or Claim 2 in which the concentration of intermediate which is dissolved in the solvent is in the range of 0.1 to 30% by weight of the solution.

10. The process of Claim 1, Claim 2, Claim 3, or Claim 4 in which the temperature of the solution is adjusted to between the freezing point of the solvent and that the temperature which corresponds to a solvent vapor pressure of no more that 100 mm Hg before passing the inert gas stream containing fluorine through the solution.

11. The process of Claim 1 wherein the fluorine concentration of the inert gas stream is increased according to a predetermined timed sequence which comprises maintaining the initial fluorine concentration until 2.3% of the theoretical amount of fluorine has been introduced into the reaction increasing the initial fluorine concentration to 11.8% by volume and maintaining that concentration until 7.1% of the theoretical amount of fluorine has been introduced into the reaction, increasing the fluorine concentration to 28.6% by volume and maintaining that concentration until 16.5% of the theoretical amount of fluorine has been introduced into the reaction, increasing the fluorine concentration to 40% by volume and maintaining that concentration until 26% of the theoretical amount of fluorine has been introduced into the reaction, increasing the fluorine concentration to 50% by volume and maintaining that concentration until 157% of the theoretical amount of fluorine has been introduced into the reaction.

F I G. 1